# EUROPEAN PATENT SPECIFICATION

(11) **EP 0 486 304 B1**
(45) Date of publication and mention of the grant of the patent: **29.01.1997**
(21) Application number: 91310521.9
(22) Date of filing: 14.11.1991
(51) Int. Cl.: G06F 15/177

(54) **Initialising computer systems**
Initialisierung von Rechnersystemen
Initialisation de systèmes d'ordinateur

(30) Priority: 14.11.1990 JP 306082/90
(43) Date of publication of application: 20.05.1992
(73) Proprietor: FUJITSU LIMITED, Kawasaki-shi, Kanagawa 211 (JP); PFU LIMITED, Kahoku-gun Ishikawa 929-11 (JP)
(72) Inventor: Ikeda, Kazuhiko, c/o PFU Limited, Yamato-shi, Kanagawa 242 (JP); Sakai, Satoru, c/o Fujitsu Limited, Kawasaki-shi, Kanagawa 211 (JP)
(74) Representative: Fane, Christopher Robin King

(56) References cited:
- US-A- 4 596 012
- PATENT ABSTRACTS OF JAPAN vol. 13, no. 80 (P-832)(3428) 23 February 1989
- PATENT ABSTRACTS OF JAPAN vol. 12, no. 319 (P-751)(3166) 30 August 1988
- PATENT ABSTRACTS OF JAPAN vol. 12, no. 350 (P-760)(3197) 20 September 1988

## Description

The present invention relates to initialising system such as, for example, close-coupled multiprocessor systems which include a plurality of processors and one main memory connected to the processors through a system bus.

Recently, multiprocessor systems have been widely used in computer systems. In general, there are two kinds of multiprocessor systems, namely a close-coupled type and coarse-coupled type. The former has one main memory used in common for all processors, whereas the latter has a plurality of memories each connected to the processor. An embodiment of the present invention relates to the close-coupled multiprocessor system.

In a close-coupled multiprocessor system, any one of processors (referred to as a "master processor") runs an initial programm loading (referred to hereinafter as IPL) operation when setting up the system, and other processors wait until the IPL operation is completed. After the IPL operation is normally completed by the master processor, the system can operate.

In a previously-proposed system the processor that becomes the master processor has been previously determined by a computer maker. Accordingly, if a fault accidentally occurs in the master processor, the IPL operation can not be completed so that the system can not operate. In this case, since other processors must wait until the master processor is operational, it is impossible to immediately constitute a new system based on other processors other than the master processor.

To overcome this problem JP-A-63-83856 proposes data processing apparatus including a plurality of individual processors; and initialisation means, connected to the said processors and including processor designating means designating a first one of the processors as a higher priority processor than a second one of the processors, for causing the designated first processor to commence an initialisation operation in response to a predetermined event and, if that processor fails to complete the operation successfully, for causing the designated second processor to commence the said initialisation operation.

In this prior apparatus the processor designating means includes a flag register which has one flag bit for each of the processors PO - Pn. The order (0, 1, ... n) of the flag bits in the flag register denotes the priority order of the processors for performing the initialisation operation. Each time the initialisation operation is commenced the processors PO - Pn check the flag register and one of them determines that it is the designated processor if its flag bit is set and all the higher-priority flag bits are reset. The flag bits are initially all set before the start of the initialisation operation so that when the initialisation operation is first commenced the processor P0 is designated to perform the operation (bit 0 = 1, no higher-priority flag bits). If the processor P0 fails to complete the initialisation operation successfully, flag bit 0 is reset so that when the initialisation operation commences again the processor P1 is designated (bit 0 = 0; bit 1 = 1).

However, in this prior apparatus the priority order of the processors is determined by the order of the flag bits in the flag register and it is not possible to select the processors for use in the initialisation operation freely from the available processors or to choose the priority order of those selected processors.

According to the present invention the designated first and second processors have different respective identification codes and the processor designating means includes a first storage unit storing the identification codes of the designated first and second processors and assigning an order of priority to the stored identification codes so that the identification code of the designated first processor is assigned a higher priority than that of the designated second processor; and the order in which the processors perform the initialisation operation is determined by the assigned priority order of the stored identification codes; the determination of such failure of the currently-designated processor being made after expiry of a predetermined time interval following commencement by that processor of the operation.

Reference will now be made, by way of example, to the accompanying drawings; in which:
Fig. 1 is a schematic block diagram of a close-coupled multiprocessor system having an initialization system embodying the present invention;
Fig. 2 is a detailed block diagram of the close-coupled multiprocessor system shown in Fig. 1; and
Fig. 3 is a flowchart for explaining operation of an initialization system shown in Fig. 2.

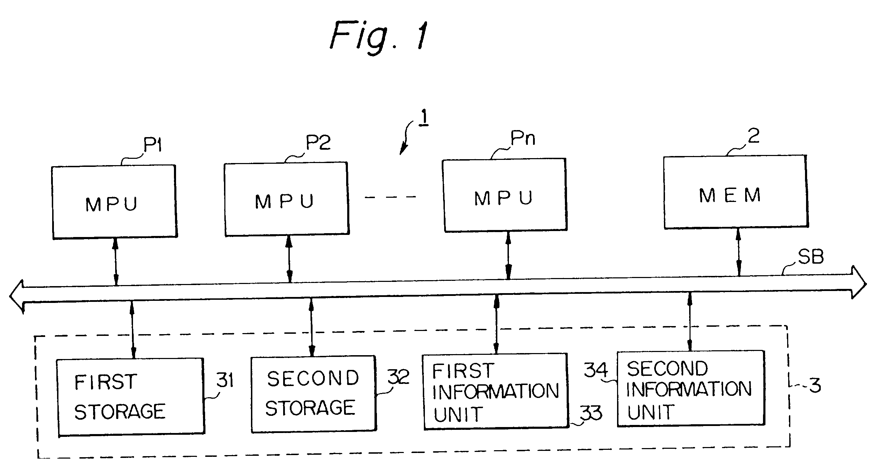

Figure 1 is a schematic block diagram of a close-coupled multiprocessor system having an initialization system embodying the present invention. In Fig. 1, reference number 1 denotes processors (MPU), 2 a storage (MEM), 3 an initialization system, and SB a system bus. The close-coupled multiprocessor system 1 includes a plurality of processors P1 to Pn and the main memory 2 connected to the processors P1 to Pn through the system bus SB. Further, the initialization system 3 is connected to the processors P1 to Pn through the system bus SB.

The initialization system 3 includes: a first storage 31 for storing identification (ID) codes corresponding respectively to the processors,one of ID codes designating a master processor, and other ID codes having a priority for designating the next master processor; a second storage 32 for storing a program to initialize the system and a program to supervise an initialization time (predetermined time interval); a first information unit 33 for informing of the start of operation of the processors; and a second information unit 34 for informing of the completion of initialization of the master processor.

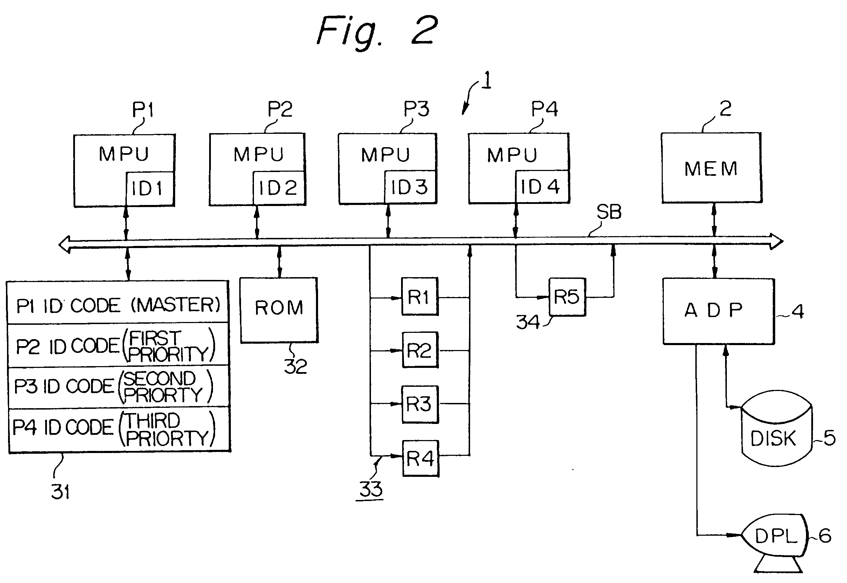

Figure 2 is a detailed block diagram of the close-coupled multiprocessor system shown in Fig. 1. In Fig. 2, reference number 4 denotes an adaptor (ADP), 5 an external storage device (DISK), and 6 a display device (DPL). The external storage device 5 stores a system program. The adaptor 4 is used for controlling the read of the system program from the external storage device 5 and for writing it into the memory 2. Each processor P1 to P4 has a register ID1 to ID4 for storing the ID code of its own processor (referred to hereinafter as the "self ID code").

The first storage 31 has, for example, a non-volatile memory for storing ID codes corresponding respectively to the ID codesof the processors. In this case, one of the ID codes is designated as the master processor (referred to hereinafter as the "master ID code") and other ID codes have a priority to designate the master processor. For example, the processor P1 may be designated as the master, and the priority of the other processors P2 to P4 may be given by P2>P3>P4. Accordingly,if a fault occurs in the designated first processor P1 in the IPL operation, the processor P2 is designated as the master processor (designated second processor) as explained in detail below.

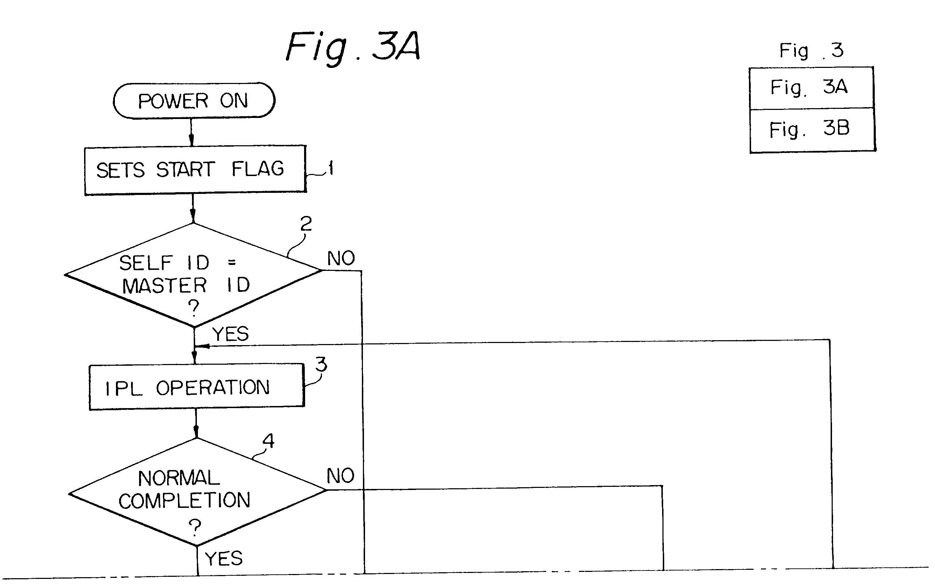

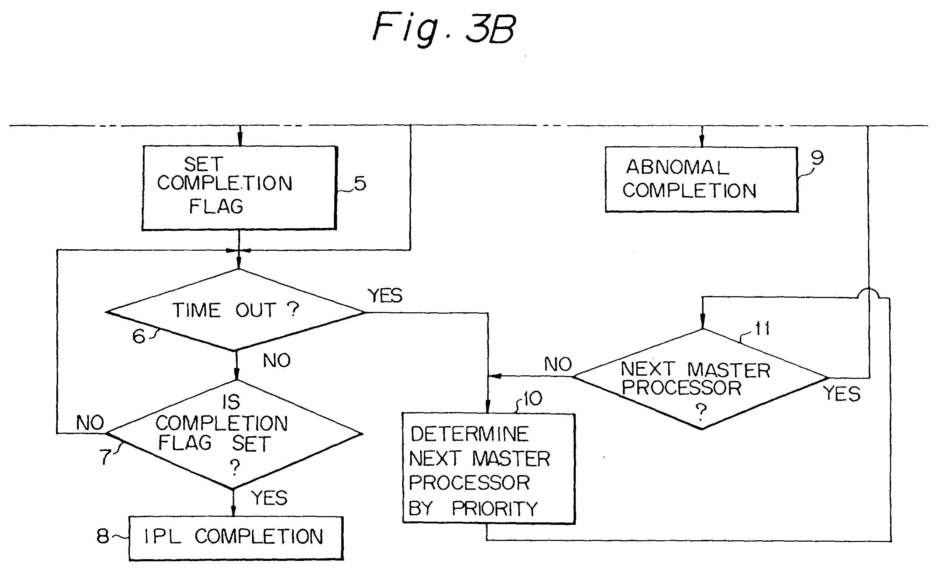

The second storage 32 has, for example, a read only memory (ROM) for storing an initialization program to initialize the system. The initialization program is shown in Fig. 3. The ROM further includes a supervisory program for supervising initialization time of the master processor and a flag for indicating completion of the initialization.

The first information unit 33 has, for example, registers R1 to R4 corresponding respectively to the processors P1 to P4. Each register R1 to R4 stores a flag indicating the start of an operation (referred to hereinafter as "start flag"). In this system, all start flags (when all processors are normal) are turned ON when the system is set up.

The second information unit 34 has, for example, a register R5. The register R5 stores a flag indicating completion of the initialization by the master processor (referred to hereinafter as the "completion flag"). When the initialistion operation is normally completed by the master processor P1, the completion flag is turned ON in the register R5. As explained below, other processors P2 to P4 supervise or monitor this completion flag. If the completion flag is not turned ON after a predetermined initialization time (predetermined time interval), one of other processors having the highest priority becomes the master processor instead of the master processor P1.

Figure 3 is a flowchart for explaining operation of the initialization system shown in Fig. 2. This flowchart is stored in the ROM 32 as the initialization program. When the power is turned ON or the system is set up (i.e. in response to a predetermined event), all processors set the start flag in the corresponding register R1 to R4 in the first information unit 33 (step 1). Next, each processor P1 to P4 compares its self ID code with the ID codes in the non-volatile memory 31, and determines whether or not its self ID code coincides with the master ID code (step 2). Since in the example of Fig. 2 the self ID code of processor P1 coincides with the master ID code (YES), the master processor P1 runs the IPL operation (step 3). Further, the master processor P1 determines whether or not the IPL operation is normally completed (step 4). When the IPL operation is normally completed (YES), the master processor P1 sets the completion flag in the register R5 of the second information unit 34 (step 5). Further, in step 4, the master processor P1 reads the system program stored in the DISK 5 and stores it into the memory 2 through the adaptor 4. However, when a fault occurs in other devices, for example, the adaptor 4, the DISK 5 and the display 6, the system is down as an abnormal failure (step 9).

Meanwhile, other processors P2 to P4 monitor the completion flag of the master processor P1 for a predetermined supervisory time based on the initialisation time of the master processor P1 (step 6). The initialisation time is determined by the time necessary for initialising the system. If the completion flag of the second information unit 34 is not turned ON within the predetermined supervisory time, i.e. if the initialization time is longer than the predetermined supervisory time (YES), because a fault has occured in the master processor P1, another processor, having the highest priority after the processor P1, must be identified to become the new master processor (step 10).

Next, the new master processor, for example the processor P2 determines whether or not its self ID code coincides with the ID code having the highest priority (step 11). If its self ID code coincides with the ID code (YES) as the master processor, the IPL operation of the master processor P2 restarts from step 3. When the self ID code of the master processor P2 does not coincide with the ID code having the highest priority, any other processor having the next priority becomes the new master processor in step 10.

Further, other processors P3 and P4 supervise the completion flag of the master processor P2 during initialization time thereof. When the initialization time is not over (NO, in step 6) and the completion flag is turned ON (YES, in step 7), this means that the IPL operation by the master processor P2 is completed (step 8).

Still further, if a fault occurs in the processor P2, another of the processors having the next priority, for example the processor P3, performs the same operation of the initialization as explained above from the steps 10 and 11. Accordingly, even if a fault occurs in any of the processors, it is possible to quickly set up the system.

In other embodiments, it is possible to use a dipswitch instead of the non-volatile memory 31. The dipswitch has a plurality of ON/OFF contacts. Accordingly, it is possible to designate the master ID code based on the ON state of the contact.

## Claims

1. Data processing apparatus including a plurality of individual processors (P1 to P4); and
initialisation means (3), connected to the said processors and including processor designating means (31) designating a first one (P1) of the processors as a higher priority processor than a second one (P2) of the processors, for causing the designated first processor to commence an initialisation operation in response to a predetermined event and, if that processor fails to complete the operation successfully, for causing the designated second processor to commence the said initialisation operation;
characterised in that the designated first and second processors (P1, P2) have different respective identification codes and the processor designating means includes a first storage unit (31) storing the identification codes of the designated first and second processors and assigning an order of priority to the stored identification codes so that the identification code of the designated first processor is assigned a higher priority than that of the designated second processor; and
in that the order in which the processors perform the initialisation operation is determined by the assigned priority order of the stored identification codes;
the determination of such failure of the currently-designated processor being made after expiry of a predetermined time interval following commencement by that processor of the operation.

2. Data processing apparatus as claimed in claim 1, being of the close-coupled type including a single main memory (2) connected to each of the said processors by way of a system bus (SB), the said initialisation means (3) also being connected to the said processors (P1 to P4) by way of the said system bus.

3. Data processing apparatus as claimed in claim 1 or 2, wherein the said first storage unit (31) comprises a non-volatile memory.

4. Data processing apparatus as claimed in claim 1, 2 or 3, wherein the said initialisation means (3) further include:
a second storage unit (32) storing a program used to initialise the apparatus and a program used to detect the said expiry of the said predetermined time interval;
first information means (33) for indicating whether or not each processor has started to operate normally; and
second information means (34) for indicating whether or not the said initialisation operation has been completed successfully by one of the designated processors.

5. Data processing apparatus as claimed in claim 4, wherein the said second storage unit (32) comprises a read only memory (ROM).

6. Data processing apparatus as claimed in claim 4 or 5, wherein the said first information means (33) comprise registers (R1 to R4) corresponding respectively to the said processors (P1 to P4), each such register serving to store a flag indicating the start of normal operation by the processor concerned.

7. Data processing apparatus as claimed in any one of claims 4 to 6, wherein the said second information means (34) comprise a register (R5) for storing a flag indicating successful completion of the initialisation operation by one of the designated processors.

8. Data processing apparatus as claimed in claim 7, wherein the completion flag is turned ON when the said initialisation operation is completed successfully by the designated first processor (P1), the other processors (P2 to P4) being operative to monitor the said completion flag and, if it is not turned ON within the said predetermined time interval, to determine from the identification codes stored in the said first storage unit (31) which one of them is the designated second processor, whereupon that designated second processor (P2) then commences the initialisation operation.

## Patentansprüche

1. Datenverarbeitungsvorrichtung, enthaltend eine Vielzahl von einzelnen Prozessoren (P1 bis P4); und
Initialisierungsmittel (3), verbunden mit den Prozessoren und ein prozessorbezeichnendes Mittel (31) enthaltend, das einen ersten (P1) der Prozessoren als einen Prozessor höherer Priorität als ein zweiter (P2) der Prozessoren bezeichnet, um zu veranlassen, daß der bezeichnete erste Prozessor eine Initialisierungsoperation als Antwort auf ein vorbestimmtes Ereignis beginnt, und, falls der Prozessor die Operation nicht erfolgreich beendet, um zu veranlassen, daß der bezeichnete zweite Prozessor die Initialisierungsoperation beginnt;
dadurch gekennzeichnet, daß die bezeichneten ersten und zweiten Prozessoren (P1, P2) verschiedene jeweilige Identifikationscodes haben und das prozessorbezeichnende Mittel eine erste Speichereinheit (31) enthält, die die Identifikationscodes der bezeichneten ersten und zweiten Prozessoren speichert und eine Ordnung einer Priorität den gespeicherten Identifikationscodes zuordnet, so daß dem Identifikationscode des bezeichneten ersten Prozessors eine höhere Priorität als dem des bezeichneten zweiten Prozessors zugeordnet ist; und
dadurch, daß die Ordnung, in der die Prozessoren die Initialisierungsoperation ausführen, durch die zugeordnete Prioritätsordnung der gespeicherten Identifikationscodes bestimmt ist;
wobei die Bestimmung eines solchen Versagens des gegenwärtig bezeichneten Prozessors nach Ablauf eines vorbestimmten Zeitintervalls nach Beginn durch den Prozessor der Operation vorgenommen wird.

2. Datenverarbeitungsvorrichtung nach Anspruch 1, die von dem eng gekoppelten Typ ist, der einen einzelnen, mit jedem der Prozessoren durch einen Systembus (SB) verbundenen Hauptspeicher (2) enthält, wobei das Initialisierungsmittel (3) ebenfalls mit den Prozessoren (P1 bis P4) durch den Systembus verbunden ist.

3. Datenverarbeitungsvorrichtung nach Anspruch 1 oder 2, worin die erste Speichereinheit (31) einen nicht-flüchtigen Speicher umfaßt.

4. Datenverarbeitungsvorrichtung nach Anspruch 1, 2 oder 3, worin die besagten Initialisierungsmittel (3) ferner enthalten:
eine zweite Speichereinheit (32), die ein Programm, das verwendet wird, um die Vorrichtung zu initialisieren, und ein Programm speichert, das verwendet wird, um den Ablauf des vorbestimmten Zeitintervalls zu detektieren;
erste Informationsmittel (33), um anzuzeigen, ob jeder Prozessor normal zu arbeiten begonnen hat oder nicht; und
zweite Informationsmittel (34), um anzuzeigen, ob die Initialisierungsoperation durch einen der bezeichneten Prozessoren erfolgreich beendet worden ist oder nicht.

5. Datenverarbeitungsvorrichtung nach Anspruch 4, worin die zweite Speichereinheit (32) einen Nur-Lese-Speicher (ROM) umfaßt.

6. Datenverarbeitungsvorrichtung nach Anspruch 4 oder 5, worin die ersten Informationsmittel (33) Register (R1 bis R4) umfassen, die jeweils den Prozessoren (P1 bis P4) entsprechen, wobei jedes derartige Register dazu dient, ein Kennzeichen zu speichern, das den Start einer normalen Operation durch den betreffenden Prozessor anzeigt.

7. Datenverarbeitungsvorrichtung nach irgendeinem der Ansprüche 4 bis 6, worin die zweiten Informationsmittel (34) ein Register (R5) umfassen, um ein Kennzeichen zu speichern, das eine erfolgreiche Beendigung der Initialisierungsoperation durch einen der bezeichneten Prozessoren anzeigt.

8. Datenverarbeitungsvorrichtung nach Anspruch 7, worin das Beendigungskennzeichen EINGESCHALTET wird, wenn die Initialisierungsoperation durch den bezeichneten ersten Prozessor (P1) erfolgreich beendet ist, wobei die anderen Prozessoren (P2 bis P4) betriebsfähig sind, um das Beendigungskennzeichen zu überwachen und, falls es innerhalb des vorbestimmten Zeitintervalls nicht EINGESCHALTET wird, um aus den in der ersten Speichereinheit (31) gespeicherten Identifikationscodes zu bestimmen, welcher von ihnen der bezeichnete zweite Prozessor ist, woraufhin der bezeichnete Prozessor (P2) dann die Initialisierungsoperation beginnt.

## Revendications

1. Système de traitement de données comprenant une pluralité de processeurs individuels (P1 à P4); et
- des moyens d'initialisation (3) connectés auxdits processeurs et comportant des moyens de désignation de processeur (31) désignant un premier (P1) des processeurs comme processeur à priorité la plus élevée qu'un deuxième (P2) des processeurs, pour amener le premier processeur désigné à commencer une opération d'initialisation en réponse à un événement prédéterminé et, si ce processeur ne réussit pas à terminer l'opération avec succès, pour amener le deuxième processeur désigné à commencer ladite opération d'initialisation;
caractérisé en ce que les premier et deuxième processeurs désignés (P1, P2) ont des codes d'identification respectifs différents et les moyens de désignation de processeur comportent une première unité de mémorisation (31) mémorisant les codes d'identification des premier et deuxième processeurs désignés et affectant un ordre de priorité aux codes d'identification mémorisés, de telle manière que le code d'identification du premier processeur désigné soit affecté d'une priorité supérieure à celle du deuxième processeur désigné; et
en ce que l'ordre dans lequel les processeurs exécutent l'opération d'initilisation est déterminé par l'ordre de priorité affecté aux codes d'identification,
la détermination d'une telle défaillnce du processeur actuellement désigné étant faite après expiration d'un intervalle de temps prédéterminé suivant le commencement de l'opération par ce processeur.

2. Appareil de traitement de données selon la revendication 1, étant du type à couplage serré comportant une mémoire principale unique (2) connectée à chacun desdits processeurs au moyen d'un bus de système (SB), lesdits moyens d'initialisation (3) étant aussi connectés auxdits processeurs (P1 à P4) au moyen dudit bus de système.

3. Système de traitement de données selon la revendication 1 ou 2, dans lequel ladite première unité de mémorisation (31) comprend une mémoire non volatile.

4. Système de traitement de données selon la revendication 1, 2 ou 3, dans lequel lesdits moyens d'initialisation (3) comprennent en outre:
- une deuxième unité de mémorisation (32) mémorisant un programme utilisé pour initialiser le système, et un programme utilisé pour détecter ladite expiration dudit intervalle de temps prédéterminé;
- des premiers moyens d'information (33) pour indiquer si chaque processeur a commencé ou non à fonctionner normalement; et
- des deuxièmes moyens d'information (34) pour indiquer si ladite opération d'initialisation a été terminée avec succès par un des processeurs désignés.

5. Système de traitement de données selon la revendication 4, dans lequel ladite deuxième unité de mémorisation (32) comprend une mémoire morte (ROM).

6. Système de traitement de données selon la revendication 4 ou 5, dans lequel lesdits premiers moyens d'information (33) comprennent des registres (R1 à R4) correspondant respectivement auxdits processeurs (P1 à P4), chacun de ces registres servant à mémoriser un drapeau indiquant le début d'un fonctionnement normal par le processeur concerné.

7. Système de traitement de données selon l'une quelconque des revendications 4 à 6, dans lequel lesdits deuxièmes moyens d'information (34) comprennent un registre (R5) pour mémoriser un drapeau indiquant l'achèvement réussi de l'opération d'initialisation par un des processeurs désignés.

8. Système de traitement de données selon la revendication 7, dans lequel le drapeau d'achèvement est mis à "un" lorsque ladite opération d'initialisation est terminée avec succès par le premier processeur désigné (P1), les autres processeurs (P2 à P4) étant opérants pour surveiller ledit drapeau d'achèvement et, s'il n'est pas mis à "un" dans ledit intervalle de temps prédéterminé, pour déterminer parmi les codes d'identification mémorisés dans ladite première unité de mémorisation (31) lequel d'entre eux est le deuxième processeur désigné, après quoi ce deuxième processeur désigné (P2) commence l'opération d'initialisation.
